**Europäisches Patentamt**

**European Patent Office**

**Office européen des brevets**

(19)

(11) Veröffentlichungsnummer: **0 629 862 A1**

(12) **EUROPÄISCHE PATENTANMELDUNG**

(21) Anmeldenummer: **94108486.5**

(51) Int. Cl.⁵: **G01P 5/10**

(22) Anmeldetag: **01.06.94**

---

(30) Priorität: **18.06.93 DE 4320326**

(43) Veröffentlichungstag der Anmeldung:
**21.12.94 Patentblatt 94/51**

(84) Benannte Vertragsstaaten:
**DE FR GB SE**

(71) Anmelder: **SIEMENS AKTIENGESELLSCHAFT**
**Wittelsbacherplatz 2**
**D-80333 München (DE)**

(72) Erfinder: **Breimesser, Fritz, Dipl.-Ing.**
**Dahlmannstrasse 124**
**D-90491 Nürnberg (DE)**
Erfinder: **Schörner, Reinhold, Dr. Dipl.-Phys.**
**Wiesenstrasse 27**
**D-91091 Grossenseebach (DE)**

---

(54) **Vorrichtung zur Messung einer radialen Gas- oder Flüssigkeitsströmung mit einer Wheatstone-Brücke von vier temperaturempfindlichen Widerständen.**

(57) Zum Messen einer Gas- oder Flüssigkeitsströmung sind Mittel zum Umwandeln dieser Strömung in eine bezüglich einer Mittelachse (M) radiale Strömung und zwei Sensoren (10 und 20) mit jeweils zwei in der radialen Strömung hintereinander angeordneten temperaturempfindlichen Widerstandseinrichtungen (2 und 4 bzw. 6 und 8) vorgesehen. Die vier Widerstandseinrichtungen (2, 4, 6 und 8) haben jeweils die Gestalt von Kreissegmenten um die Mittelachse (M) und sind derart in eine Wheatstone-Brücke geschaltet, daß stromabwärts und stromaufwärts angeordnete Widerstandseinrichtungen (2 und 6 bzw. 4 und 8) einander abwechseln. Dadurch erhält man eine Meßvorrichtung mit einer hohen Meßempfindlichkeit.

FIG 2

EP 0 629 862 A1

Die Erfindung betrifft eine Vorrichtung zur Messung einer Gas- oder Flüssigkeitsströmung.

Zur Messung einer Gas- oder Flüssigkeitsströmung sind Anemometer bekannt, bei denen ein oder mehrere Widerstandseinrichtungen in der Strömung angeordnet werden. Diese Widerstandseinrichtungen können als dünne Widerstandsdrähte oder auch als Dünnschicht-Widerstände ausgebildet sein. Durch eine vorgegebene elektrische Heizleistung werden die Widerstandseinrichtungen beheizt, und es stellt sich im Wärmegleichgewicht eine bestimmte Temperaturverteilung an den Widerstandseinrichtungen ein. Eine Gas- oder Flüssigkeitsströmung verursacht nun durch erzwungene Konvektion eine Änderung der Wärmeverteilung und damit der Temperaturen an den Widerstandseinrichtungen, die abhängig ist von der Fließgeschwindigkeit und der Wärmekapazität des Gases oder der Flüssigkeit. Zum Erfassen dieser Temperaturänderung ist wenigstens eine Widerstandseinrichtung mit einem von Null verschiedenen Temperaturkoeffizienten als Detektor vorgesehen. Die Temperaturänderung am Detektor bewirkt eine Änderung seines elektrischen Widerstandes, die gemessen und ausgewertet wird.

Es sind Anemometer mit zwei Widerstandseinrichtungen bekannt, die beide zugleich als Heizer und Detektor vorgesehen sind und bezüglich der Strömungsrichtung hintereinander angeordnet sind. Die Strömung führt in dieser Anordnung Wärme von dem stromaufwärts angeordneten Widerstand ab und dem stromabwärts angeordneten Widerstand Zu. Die detektierten Temperaturänderungen an den beiden Widerständen sind somit unterschiedlich groß und ermöglichen deshalb zusätzlich zur Messung des Flusses auch eine Aussage über die Strömungsrichtung. In einem Anemometer mit drei Widerstandseinrichtungen sind zwei Detektoren und ein dazwischen angeordneter Heizer vorgesehen. Der elektrische Widerstand des Heizers muß dabei nicht temperaturabhängig sein. Auch ein solches Anemometer kann den Fluß und zugleich die Strömungsrichtung erfassen.

An ein ideales Anemometer sind bestimmte Anforderungen zu stellen, die einander sogar zum Teil widersprechen können. Um ein ausreichend großes Sensorsignal zu erhalten, muß der Temperaturkoeffizient der detektierenden Widerstandseinrichtung hinreichend groß sein. Außerdem muß der elektrische Widerstand dieser Widerstandseinrichtung einer Auswerteelektronik angepaßt sein und insbesondere größer als die Zuleitungswiderstände sein. Dies entspricht einer Forderung nach einer Mindestlänge der Widerstandseinrichtungen bei vorgegebenem Querschnitt und Material. Um einen hohen thermischen Wirkungsgrad zu erreichen, sollen die Widerstandseinrichtungen thermisch gut isoliert sein. Die Wärmekapazität der Widerstandseinrichtungen und ihrer Stützeinrichtungen ist überdies klein zu halten, weil durch sie die Ansprechzeit des Sensors auf Temperaturänderungen bestimmt wird. Schließlich soll das Anemometer auch noch mechanisch stabil und vibrationsfest sein. Es ist bekannt, daß diese Anforderungen durch die Integration von Anemometer-Strukturen in Silizium mit Hilfe der Mikrostrukturtechnik hinreichend erfüllt werden können.

In einer bekannten Ausführungsform eines in Silizium integrierten Strömungssensors sind in einer Detektor-Heizer-Detektor-Anordnung drei langgestreckte, geradlinige Dünnschicht-Widerstandselemente parallel zueinander und senkrecht zur Strömungsrichtung auf einer dünnen, dielektrischen Membran angeordnet. Die dünne Membran dient zur elektrischen und thermischen Isolation und besteht aus einer Sandwich-Struktur von Siliziumnitrid und Siliziumdioxid. Die Widerstandselemente können zum Schutz gegen Korrosion und aggressive Gase mit einer Passivierungsschicht aus Siliziumnitrid überzogen sein. Dieser Strömungssensor spricht auf Strömungsänderungen schnell an, weil die Wärmekapazität der Widerstandselemente und der dünnen Membran gering ist (WO 89/05963). Da die relative Widerstandsänderung am Detektor maximal ist, wenn Heizelement und Detektor über der gesamten Länge einander gegenüberliegen, hat dieser bekannte Gasströmungssensor eine hohe Meßempfindlichkeit. Ausreichend lange Widerstände auf der Membran erfordern jedoch eine entsprechend große Sensorfläche.

Bei einem weiteren bekannten, in Silizium integrierten Strömungssensor sind zwei in einer gemeinsamen Ebene liegende Widerstandseinrichtungen vorgesehen und als Mäanderblöcke aus mehreren nebeneinanderliegenden, langgestreckten Sensorelementen ausgeführt, die senkrecht zur Strömungsrichtung angeordnet sind. Beide Mäanderblöcke dienen zugleich als Heizer und Detektor. Die Widerstandsmäanderblöcke sind auf einer dielektrischen Brückenstruktur abgestützt, die sich über eine Ausnehmung in einem Siliziumkörper erstreckt. Die Ausnehmung dient zur thermischen Isolation der Widerstandseinrichtungen gegen den Siliziumkörper. Zur Auswertung der durch die Strömung verursachten Widerstandsänderung ist eine auf dem Siliziumkörper integrierte Schaltung mit drei Differenzverstärkern und einigen Festwiderständen zur Regelung des Heizstroms auf einen konstanten Wert vorgesehen. Jede der beiden Widerstandseinrichtungen ist in eine Rückkopplungsschleife über einen zugeordneten Differenzverstärker geschaltet. Bei einer Widerstandsänderung in den beiden Widerstandseinrichtungen ändern sich die Ausgangsspannungen der beiden zugeordneten Differenzverstärker, da der Strom konstant gehalten wird. Die Differenz dieser beiden Ausgangsspannungen wird in einem dritten Differenzverstärker verstärkt und dann als Meßsignal ausgegeben. Das Meßsignal ist damit ein Maß für die Temperaturdifferenz an den beiden Widerstandeinrichtungen und damit für einen Gasfluß (EP-B1-0 076 935). Bei dieser bekannten Ausführungsform ist die benötigte Sensorfläche zum Unterbringen einer vorgegebenen Gesamtlänge der Widerstandselemente durch deren mäanderförmige Gestaltung verhältnismäßig klein. Jedoch ist die relative Widerstandsänderung an einem Widerstandsmäanderblock vergleichsweise gering, da im wesentlichen nur die jeweils stromaufwärts liegenden Randbereiche der Widerstandsmäanderblöcke zur Messung beitragen. Die Meßempfindlichkeit dieses bekannten Strömungssensors ist deshalb begrenzt. Außerdem ist die Auswerteschaltung für das Sensorsignal vergleichsweise komplex.

Bei einem dritten bekannten, in Silizium integrierten Anemometer ist eine temperaturempfindliche Dünnschicht-Widerstandseinrichtung freitragend über einer Ausnehmung in einem Siliziumsubstrat angeordnet. Diese Widerstandseinrichtung ist als Heizer und Detektor zugleich vorgesehen und als ebener Mäanderblock aus mehreren langgestreckten Sensorelemente ausgebildet, die senkrecht zur Strömungsrichtung angeordnet sind. Zur Auswertung der durch die Strömung verursachten Widerstandsänderung an der Widerstandseinrichtung ist eine Wheatstone-Brückenschaltung vorgesehen, in der die Widerstandseinrichtung und drei externe, auf einer stabilen Temperatur gehaltene Referenzwiderstände angeordnet sind. An einer Diagonalen der Wheatstone-Brücke wird die Versorgungsspannung angelegt und an der anderen Diagonalen wird die Meßspannung abgegriffen. Die Brückenschaltung wird so abgeglichen, daß die Meßspannung Null ist, wenn keine Strömung vorhanden ist. Dadurch wird der nicht von der Strömung abhängende Grundwiderstand der detektierenden Widerstandseinrichtung eliminiert, so daß nur die im Vergleich zum Grundwiderstand kleine strömungsabhängige Widerstandsänderung gemessen wird (WO 89/03512). Bei der Verwendung von externen Referenzwiderständen in der Brückenschaltung ist jedoch eine Anpassung an den Meßwiderstand der Widerstandseinrichtung erforderlich wegen der nicht zu vermeidenden Fertigungstoleranzen bei der Herstellung eines in Silizium integrierten Anemometers.

Alle diese bekannten Strömungssensoren werden ausschließlich zur Messung axialer Strömungen eingesetzt. Der Erfindung liegt dagegen die Aufgabe zugrunde, eine Vorrichtung mit Mitteln zur Messung einer bezüglich einer Mittelachse wenigstens annähernd radialen Gas- oder Flüssigkeitsströmung anzugeben mit einer hohen Meßempfindlichkeit. Diese Vorrichtung soll sich außerdem so weiterbilden lassen, daß sie auch zur Messung beliebig gerichteter Strömungen geeignet ist.

Diese Aufgabe wird gemäß der Erfindung gelöst mit den Merkmalen des Anspruchs 1. Es sind vier temperaturempfindliche Widerstandseinrichtungen vorgesehen, die jeweils in einem wenigstens annähernd konstanten Abstand zur Mittelachse der Strömung angeordnet sind. Jeweils zwei bezüglich der radialen Strömungsrichtung hintereinander angeordnete Widerstandseinrichtungen bilden einen Sensor. Durch diese Anordnung der Widerstandseinrichtungen in der radialen Gas- oder Flüssigkeitsströmung werden in beiden Sensoren alle Teilbereiche ihrer entsprechenden Widerstandseinrichtungen wenigstens annähernd gleichmäßig von der Strömung erfaßt und erfahren eine maximale relative Widerstandsänderung, bezogen auf die Gesamtlänge der Widerstandseinrichtungen. Dadurch weisen beide Sensoren eine sehr hohe Meßempfindlichkeit auf. Die beiden Sensoren sollen dabei einander thermisch praktisch nicht beeinflussen, um ein Übersprechen ihrer Meßsignale zu vermeiden.

Die vier Widerstandseinrichtungen sind in einer Wheatstone-Brücke derart zusammengeschaltet, daß in den Sensoren bezüglich der Strömungsrichtung stromaufwärts und stromabwärts angeordnete Widerstandseinrichtungen einander abwechseln. An einer der beiden Diagonalen der Wheatstone-Brücke kann die Versorgungsquelle angeschlossen und an der anderen das Meßsignal abgegriffen werden. Durch diese Anordnung der Widerstandseinrichtungen in einer Wheatstone-Brücke werden die Widerstandsänderungen in allen Widerstandseinrichtungen vollständig in dem Meßsignal erfaßt.

Um auch Strömungen messen zu können, die nicht radial zur Mittelachse gerichtet sind, sind in einer Weiterbildung der Vorrichtung Mittel vorgesehen, mit denen aus der zu messenden Strömung wenigstens ein Teil ausgekoppelt wird und in eine bezüglich der Mittelachse radiale Strömung übergeführt wird. In einer vorteilhaften Ausführungsform wird dies erreicht durch eine entsprechende Strömungsführung in einem Hohlraum zwischen einer ersten und einer zweiten Begrenzung. Dazu ist in einem Bereich um die Mittelachse in der ersten Begrenzung mindestens eine erste Öffnung vorgesehen, durch die das Gas oder die Flüssigkeit in den Hohlraum entweder hinein- oder oder diesem herausströmen kann. Außerdem ist mindestens eine zweite Öffnung vorgesehen, durch die das Gas oder die Flüssigkeit hinaus- bzw. hineinströmen kann und die bezüglich der Mittelachse weiter außen als die erste Öffnung so angeordnet ist, daß sich die radiale Strömung in dem Hohlraum ausbildet. Zwischen der ersten Öffnung und der zweiten Öffnung sind in dem Hohlraum die Widerstandseinrichtungen zur Erfassung dieser radialen Strömung angeordnet. Das Meßsignal der Wheatstone-Brücke ist dann ein Maß für die ursprünglich nicht-radiale Strömung.

Zur weiteren Erläuterung der Erfindung wird auf die Zeichnung Bezug genommen, in deren Figuren verschiedene Ausführungsformen gemäß der Erfindung schematisch dargestellt sind.

FIG. 1

zeigt eine Ausführungsform mit vier in eine Wheatstone-Brücke geschalteten Widerstandseinrichtungen, die auf einer Membran angeordnet sind, im Querschnitt und

FIG. 2

zeigt diese Ausführungsform in einer teilweise geöffneten Draufsicht. In

FIG. 3

ist ein Schaltbild der Wheatstone-Brücke dargestellt. In der in

FIG. 4

im Querschnitt dargestellten Ausführungsform ist unter der Membran eine Öffnung in einem Stützkörper für die Membran mit einem Verschluß verschlossen und in der in

FIG. 5

im Querschnitt dargestellten Ausführungsform ist der Stützkörper mit einer Ausnehmung unter der Membran versehen.

FIG. 6

veranschaulicht eine vorteilhafte Ausführungsform in einer aufgeschnittenen Draufsicht mit Auslaßöffnungen in dem Abstandhalter und konzentrisch zueinander angeordneten Sensoren.

FIG. 7 und 8

zeigen eine Detektor-Heizer-Detektor-Anordnung in Zweilagentechnik in der Draufsicht bzw. im Querschnitt.

FIG. 9

veranschaulicht eine Ausführungsform mit in Teilwiderstandselemente aufgegliederten Widerstandseinrichtungen. Die

FIG. 10 und 11

zeigen Ausführungsformen mit umschaltbaren Meßbereichen.

In den Figuren sind sich entsprechende Teile mit denselben Bezugszeichen versehen.

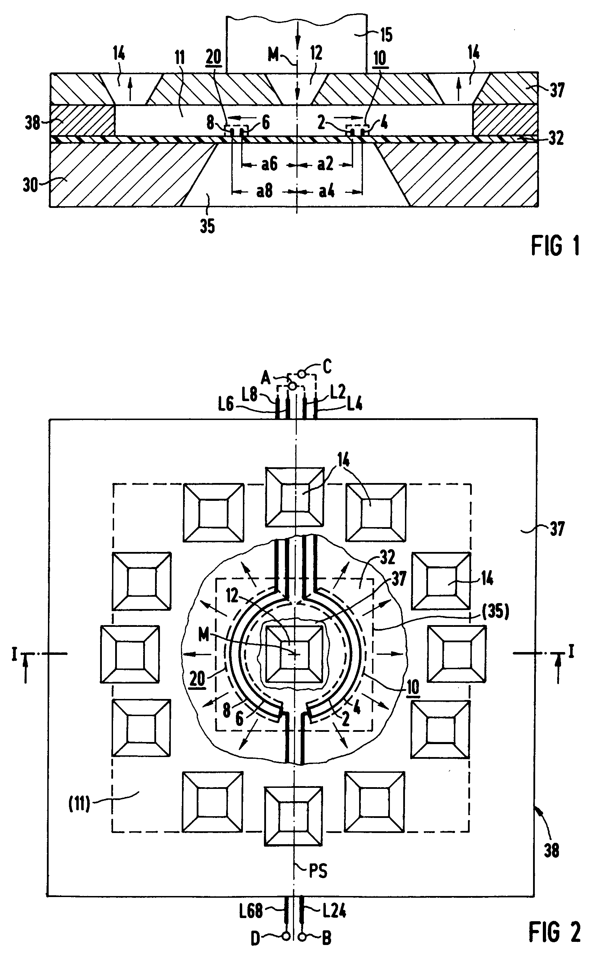

In den FIG. 1 und 2 sind vier temperaturempfindliche Widerstandseinrichtungen mit 2, 4, 6 und 8, ein mit den beiden Widerstandseinrichtungen 2 und 4 gebildeter Sensor mit 10, ein mit den beiden anderen Widerstandseinrichtungen 6 und 8 gebildeter Sensor mit 20, ein Stützkörper mit 30, eine auf dem Stützkörper 30 abgestützte Membran mit 32, eine Öffnung im Stützkörper 30 unter der Membran 32 mit 35, ein Deckel mit 37, ein Abstandhalter zwischen Membran 32 und Deckel 37 mit 38, ein zwischen Membran 32, Abstandhalter 38 und Deckel 37 gebildeter Hohlraum mit 11, eine erste Öffnung im Deckel 37 mit 12 und mehrere zweite Öffnungen im Deckel 37 mit 14, ein Strömungsraum mit 15 und eine senkrecht zur Membran 32 gerichtete Mittelachse mit M bezeichnet. In der Draufsicht gemäß FIG. 2 sind zusätzlich elektrische Anschlüsse L2, L4, L6 und L8 für die Widerstandseinrichtungen 2, 4, 6 bzw. 8 und gemeinsame Anschlüsse L24 und L68 für die Widerstandseinrichtungen 2 und 4 bzw. 6 und 8 dargestellt. Außerdem sind in FIG. 2 die Umrisse der nicht sichtbaren Öffnung 35 und des Hohlraumes 11 gestrichelt gezeichnet. Die erste Öffnung 12 liegt im Bereich der Mittelachse M, und die zweiten Öffnungen 14 sind weiter außen und vorzugsweise radialsymmetrisch zur Mittelachse M angeordnet. Es kann auch nur eine zusammenhängende zweite Öffnung 14 in dem Deckel 37 vorgesehen sein, die radialsymmetrisch ausgebildet ist.

Durch die erste Öffnung 12 strömt ein Gas oder eine Flüssigkeit aus dem Strömungsraum 15 in den Hohlraum 11, prallt auf die Membran 32 und strömt dann nach allen Seiten in bezüglich der Mittelachse M in zumindest weitgehend radialer Richtung nach außen. Die Gas- oder Flüssigkeitsströmung verläuft somit im wesentlichen in Richtung der in den Figuren dargestellten und nicht näher bezeichneten Pfeile. Das Fluidum, d.h. das Gas oder die Flüssigkeit, kann aber auch über die zweiten, außenliegenden Öffnungen 14 einströmen und über die erste, innenliegende Öffnung 12 ausströmen. Der radiale Fluß verläuft dann in umgekehrter Richtung von außen nach innen. In dieser Ausführungsform sind die zweiten Öffnungen 14 mit dem Strömungsraum 15 zum Einkoppeln des Fluidums verbunden.

In dem Hohlraum 11 sind zwischen der inneren, ersten Öffnung 12 und den äußeren, zweiten Öffnungen 14 die Sensoren 10 und 20 angeordnet. Die beiden Widerstandseinrichtungen 2 und 4 des Sensors 10 sind bezüglich der radialen Strömungsrichtung hintereinander auf der Membran 32 angeordnet, ebenso die beiden Widerstandseinrichtungen 6 und 8 des Sensors 20. Alle vier Widerstandseinrichtungen 2, 4, 6 und 8 sind derart ausgebildet, daß ihr mittlerer Abstand a2 bzw. a4 bzw. a6 bzw. a8 von der Mittelachse M jeweils wenigstens annähernd konstant ist. Die Widerstandseinrichtung 2 liegt dabei näher an der Mittelachse M als die Widerstandseinrichtung 4, d.h. der Abstand a2 ist kleiner als der Abstand a4, und die Widerstandseinrichtung 6 liegt näher an der Mittelachse M als die Widerstandseinrichtung 8, d.h. der Abstand a6 ist kleiner als der Abstand a8. Die Widerstandseinrichtungen 2, 4, 6 und 8 können dünne Widerstandsdrähte oder Dünnschicht-Widerstände sein und beispielsweise mäandriert oder einfach kreislinienförmig ausgebildet sein. Bei einer mäandrierten Ausführungsform einer Widerstandseinrichtung ergibt sich ihr mittlerer Abstand durch Mittelung über die Abstände aller Mäanderschleifen.

Alle vier Widerstandseinrichtungen 2, 4, 6 und 8 sind vorzugsweise als Heizer und Detektor zugleich vorgesehen und bestehen jeweils aus einem elektrisch leitenden Material mit einem von Null verschiedenen Temperaturkoeffizienten, der wenigstens in einem für die Messung relevanten Temperaturbereich einen eindeutigen Zusammenhang zwischen dem elektrischen Widerstand des Materials und der Temperatur herstellt.

In der dargestellten, besonders vorteilhaften Ausführungsform sind die Sensoren 10 und 20 auf verschiedenen Seiten einer die Mittelachse M enthaltenden Symmetrieebene PS angeordnet, und die Abstände a2 und a6 sowie a4 und a8 der beiden innen bzw. außen liegenden Widerstandseinrichtungen 2 und 6 bzw. 4 und 8 von der Mittelachse M sind vorzugsweise gleich groß. In dieser Ausführungsform sind die beiden Sensoren 10 und 20 thermisch besonders gut entkoppelt, weil sie von unabhängigen Teilströmungen überstrichen werden.

Die Membran 32 besteht aus dielektrischem Material und ist in ihren Randbereichen ohne Widerstandseinrichtungen auf dem Stützkörper 30 abgestützt. Der Stützkörper 30 ist unter der Membran 32 mit einer durchgehenden Öffnungen 35 versehen. Dadurch sind die Widerstandseinrichtungen 2, 4, 6 und 8 thermisch gut gegen den Stützkörper 30 isoliert. Außerdem wird die Dicke der Membran 32 möglichst gering und ihr Wärmeleitkoeffizient möglichst klein gewählt, um die Wärmekapazität der Membran 32 und damit die Ansprechzeit zu verringern und die Wärmeleitung in der Membran 32 klein zu halten. Die Widerstandseinrichtungen 2, 4, 6 und 8 können auch in der Membran 32 integriert sein.

Mit der Membran 32, dem Deckel 37 mit den Öffnungen 12 und 14 und mit dem Abstandhalter 38 sind Mittel zum Umwandeln einer beliebig und im allgemeinen axial gerichteten Strömung im Strömungsraum 15 in eine wenigstens annähernd radiale Strömung in dem Hohlraum 11 gebildet. Solche Mittel können jedoch auch anders ausgestaltet sein. Beispielsweise kann die axiale Strömung in einem im wesentlichen zylindrischen Rohr durch bezüglich der Mittelachse des Rohres radialsymmetrisch angeordnete, nach außen gerichtete Öffnungen in eine radiale Strömung umgewandelt werden. Vorzugsweise sind die Widerstandseinrichtungen 2, 4, 6 und 8 dann als das Rohr umgebende konzentrische halb- oder vollhohlzylindrische Widerstandsgitter ausgebildet, durch die die radiale Strömung senkrecht hindurchströmt.

Wenn die zu messende Strömung selbst schon radial bezüglich der Mittelachse ausgebildet ist, können die Mittel zum Umwandeln der Strömung in eine radiale Strömung ganz entfallen. Die wenigstens vier entsprechend verschalteten Widerstandseinrichtungen können dann beispielsweise auf einem elektrisch und thermisch gut isolierenden massiven Stützkörper, beispielsweise aus Glas, in der Strömung angeordnet sein.

Der Anschluß L2 der Widerstandseinrichtung 2 ist nun über eine Kontaktstelle B mit dem Anschluß L4 der Widerstandseinrichtung 4, dieser Anschluß L4 der Widerstandseinrichtung 4 über eine Kontaktstelle C mit dem Anschluß L6 der Widerstandseinrichtung 6, dieser Anschluß L6 der Widerstandseinrichtung 6 über eine Kontaktstelle D mit dem Anschluß L8 der Widerstandseinrichtung 8 und dieser Anschluß L8 der Widerstandseinrichtung 8 über eine Kontaktstelle A wieder mit dem Anschluß L2 der Widerstandseinrichtung 2 verbunden. Dadurch erhält man eine ringförmige Verschaltung der vier Widerstandseinrichtungen 2, 4, 6 und 8 in einer Wheatstone-Brücke derart, daß stromaufwärts und stromabwärts liegende Widerstandseinrichtungen einander abwechseln. An einer der Diagonalen der Wheatstone-Brücke wird an den Kontaktstellen A und C die Versorgungsspannung U angelegt und an der anderen Diagonalen wird an den Kontaktstellen B und D die Meßspannung abgegriffen. Es können aber auch umgekehrt die Versorgungsspannung an B und D und die Meßspannung an A und C liegen. Eine solche Anordnung liefert ein maximales Meßsignal, weil alle in die Wheatstone-Brücke geschalteten Widerstandseinrichtungen 2, 4, 6 und 8 einen von der Strömung entsprechend abhängigen Widerstand aufweisen.

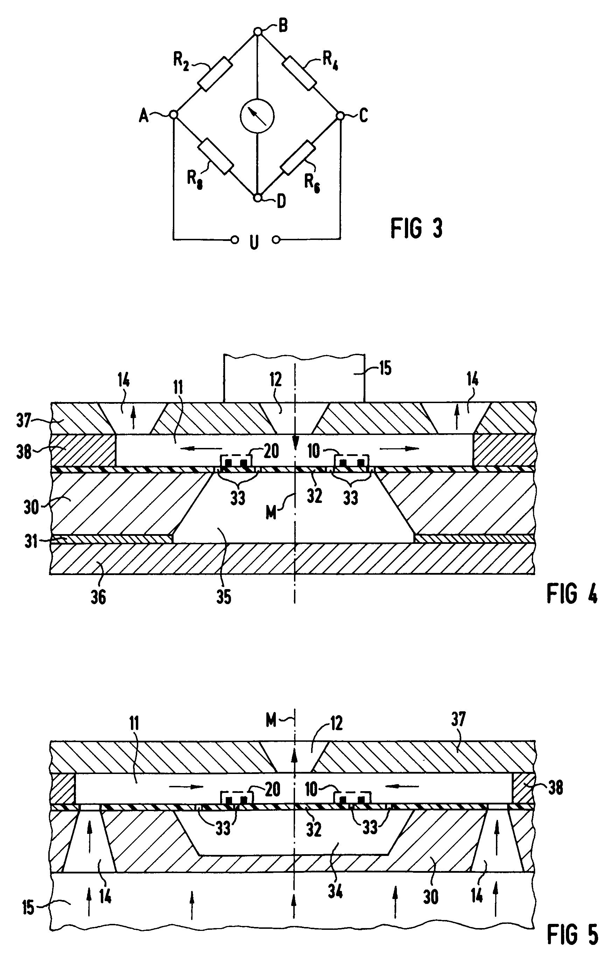

Die FIG. 3 zeigt ein entsprechendes Schaltbild der Wheatstone-Brücke mit den Widerständen $R_2$, $R_4$, $R_6$ und $R_8$ der Widerstandseinrichtungen 2, 4, 6 bzw. 8. Das zwischen den Kontaktstellen B und D abgegriffene Meßsignal ist gleich dem Quotienten $\pm (R_4 R_8 - R_2 R_6) / (R_2 + R_4)(R_6 + R_8)$ multipliziert mit der Versorgungsspannung U. Das Vorzeichen ergibt sich dabei aus der Polung der Versorgungsspannung.

Die einzelnen Widerstände $R_2$ bis $R_8$ sind eindeutig und vorzugsweise linear abhängig von der Temperatur T, so daß die Beziehung $R_i = R_i(T) = R_i(T_0)(1 + t_{Ki}(T-T_0))$ für i = 2,4,6,8 gilt mit einer Referenztemperatur $T_0$ und dem (linearen) Temperaturkoeffizienten $t_{Ki}$. Die Referenztemperatur $T_0$ ist die Temperatur, die sich im thermischen Gleichgewicht ohne Strömung an den Widerstandseinrichtungen 2, 4, 6 und 8 einstellt, und kann für jede Widerstandseinrichtung etwas verschieden sein. Die Temperaturkoeffizienten $t_{Ki}$ haben alle dasselbe Vorzeichen, vorzugsweise positiv, und sind vorzugsweise auch betragsmäßig gleich. Wird nun eine Strömung zugeführt, so transportiert das Fluidum Wärme von der stromaufwärts gelegenen Widerstandseinrichtung 2 oder 6 zur stromabwärts gelegenen Widerstandseinrichtung 4 bzw. 8. Damit werden die stromaufwärts angeordneten Widerstandseinrichtungen 2 und 6 kälter, d.h. ihre Temperaturen T werden kleiner als die Referenztemperatur $T_O$, und die stromabwärts liegenden Widerstandseinrichtungen 4 und 8 werden wärmer, d.h. ihre Temperatur T steigt über die Referenztemperatur $T_O$. Das hat zur Folge, daß die temperaturabhängige Widerstandsänderung $dR(T) = R(T_O)t_{Ki}(T-T_O)$ bei den stromaufwärts gelegenen Widerstandseinrichtungen 2 und 6 negativ sind und bei den stromabwärts gelegenen Widerstandseinrichtungen 4 und 8 positiv. Vorzugsweise sind die Widerstandsänderungen $dR_i(T)$ für alle Widerstandseinrichtungen 2, 4, 6 und 8 betragsmäßig gleich groß, d.h. $dR_2(T) = dR_6(T) = -dR(T)$ und $dR_4(T) = dR_8(T) = +dR(T)$.

Vorzugsweise sind für eine vorgegebene Referenztemperatur $T_O$ die zu den Widerstandseinrichtungen 2 und 4 gehörenden elektrischen Grundwiderstände $R_2(T_O)$ und $R_4(T_O)$ gleich groß zu wählen und die zu den Widerstandseinrichtungen 6 und 8 gehörenden Grundwiderstände $R_6(T_O)$ und $R_8(T_O)$ gleich groß zu wählen.

In einer besonders vorteilhaften Ausführungsform sind alle vier Grundwiderstände $R_2(T_O)$, $R_4(T_O)$, $R_6(T_O)$ und $R_8(T_O)$ bei der Referenztemperatur $T_O$ gleich groß auf einen Wert R eingestellt. Die Meßspannung der Brücke ist dann auf Null abgeglichen, wenn keine Strömung vorhanden ist. Das strömungsabhängige Meßsignal ist dann $U^*dR/R$ bei einer Konstantspannungsquelle und $I^*dR$ bei einer Konstantstromquelle und somit linear abhängig von der Widerstandsänderung dR. Die Meßempfindlichkeit ist in dieser Ausführungsform maximal und viermal so hoch wie bei einer Wheatstone-Brücke mit nur einem temperaturabhängigen Widerstand. Beim Einstellen der Grundwiderstände $R_2(T_O)$, $R_4(T_O)$, $R_6(T_O)$ und $R_8(T_O)$ ist dabei zu beachten, daß die weiter außen liegenden Widerstandseinrichtungen länger sind und daher ihre spezifischen Widerstände über die Materialwahl und/oder ihre Querschnitte entsprechend angepaßt werden müssen.

Die Anschlüsse L2, L4, L6 und L8 sind vorzugsweise mit einem deutlich kleineren elektrischen Widerstand ausgebildet als die Widerstandseinrichtungen 2, 4, 6 bzw. 8. Beispielsweise können die Anschlüsse L2, L4, L6 und L8 aus einem Material mit einem niedrigeren spezifischen Widerstand als ihre Widerstandseinrichtungen 2, 4, 6 bzw. 8 oder mit einem größeren Querschnitt oder beidem gebildet sein. Vorzugsweise sind die Anschlüsse L2, L4, L6 und L8 auch außerhalb des Hohlraums 11 geführt und miteinander verbunden.

In einer weiteren Ausführungsform gemäß FIG. 4 ist die Öffnung 35 im Stützkörper 30 mit einem Verschluß 36 abgedichtet, der über eine Verbindungsschicht 31 mit der Rückseite des Stützkörpers 30 verbunden ist. Für den Druckausgleich zwischen Hohlraum 11 und Öffnung 35 ist die Membran 32 mit kleinen Löchern 33 versehen. Diese Löcher 33 werden so klein gewählt und so angeordnet, daß sie die radiale Strömung in dem Hohlraum 11 nicht beeinflussen.

In FIG. 5 ist eine Ausführungsform mit einer Ausnehmung 34 im Stützkörper 30 zur thermischen Isolation der Widerstandseinrichtungen 2, 4, 6 und 8 dargestellt. Die Membran 32 erstreckt sich über diese Ausnehmung 34 und ist zum Druckausgleich mit kleinen Löchern 33 versehen. Die äußeren Öffnungen 14 sind außerdem im Stützkörper 30 und im Randbereich der über dem Stützkörper 30 angeordneten Membran 32 vorgesehen. Hier sind nun die äußeren Öffnungen 14 mit dem Strömungsraum 15 verbunden. Dadurch ergibt sich eine radiale Strömung in dem Hohlraum 11 von außen nach innen, die durch die Öffnungen 14 in den Hohlraum 11 einströmt und durch die mittlere Öffnung 12 im Bereich der Mittelachse M wieder ausströmt.

Die Membran 32 hat typischerweise eine Dicke von 0,5 $\mu$m bis 3 $\mu$m, der Abstandhalter 38 ist vorzugsweise dicker als 250 $\mu$m und die Dicke des Stützkörpers 30 sowie des Deckels 37 liegen vorzugsweise zwischen 300 $\mu$m und 400 $\mu$m. Die Breite der Membran 32 wird vorzugsweise in einem Bereich von einigen mm gewählt. Die Dicke der Widerstandseinrichtungen 2, 4, 6 und 8 liegt beispielsweise zwischen 0,1 $\mu$m und 0,5 $\mu$m, während ihre Breite zwischen 5 $\mu$m und 25 $\mu$m gewählt werden kann.

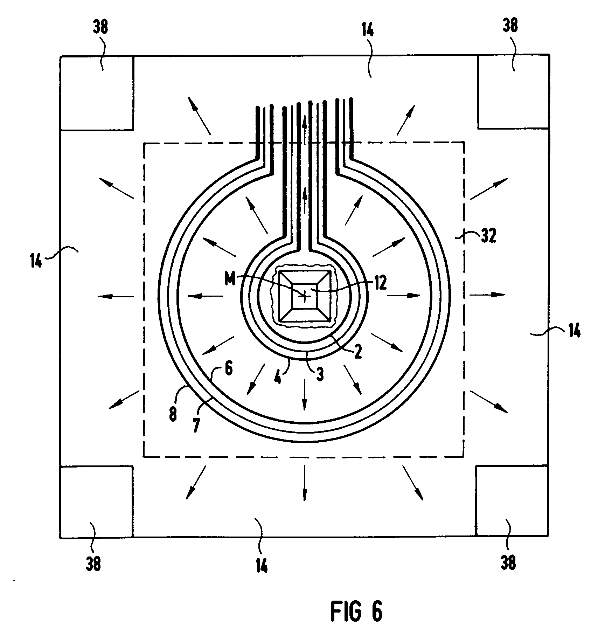

In einer besonders vorteilhaften Ausführungsform gemäß FIG. 6 werden die äußeren Öffnungen 14 durch Aufteilung des Abstandhalters 38 gebildet, so daß der Hohlraum 11 seitlich offen ist und der Abstandhalter 38 aus mehreren einzelnen Sokkeln besteht. Das durch die mittlere Öffnung 12 im - nicht dargestellten - Deckel 37 eingeströmte Gas oder die Flüssigkeit kann damit seitlich, parallel zur Membran 32 ausströmen und die Strömung kann sich über einen größeren Bereich radial ausbilden. Die Öffnungen 14 können auch als Nuten oder Löcher in dem Abstandhalter 38 ausgebildet sein. Ferner sind in der dargestellten Ausführungsform die Widerstandseinrichtungen 2, 4, 6 und 8 alle wenigstens annähernd konzentrisch zur Mittelachse M angeordnet. Zwischen den Widerstandseinrichtungen 2 und 4 ist ein erstes Heizelement 3 und zwischen den Widerstandseinrichtungen 6 und 8 ist ein zweites Heizelement 7 angeordnet. Die Widerstandseinrichtungen 2 und 4 sowie 6 und 8 bilden zusammen mit dem jeweils dazwischen angeordneten Heizelement 3 bzw. 7 eine Detektor-Heizer-Detektor-Anordnung für die Sensoren 10 bzw. 20. Ein Vorteil einer Heizer-Detektor-Heizer-Anordnung gegenüber einer Anordnung mit zwei als Heizer und Detektor zugleich vorgesehenen Widerstandseinrichtungen besteht darin, daß Heizer und Detektoren elektrisch unabhängig voneinander ausgebildet und versorgt werden können. Die Heizelemente 3 und 7 werden zur Unterdrückung von Elektromigration bei hohen Stromdichten vorzugsweise mit einem Wechselstrom geeigneter Frequenz und Wellenform, beispielsweise Sinus- oder Rechteckform, betrieben, während für die Detektoren 2, 4, 6 und 8 Gleichspannungen und niedrigere Stromdichten verwendet werden können. Für die Heizelemente 3 und 7 werden außerdem vorzugsweise Materialien mit einem hohen spezifischen Widerstand und einem möglichst kleinen Temperaturkoeffizienten gewählt, während die Detektormaterialien einen möglichst großen Temperaturkoeffizienten und einen vergleichsweise kleinen Grundwiderstand für eine hohe Meßempfindlichkeit aufweisen sollten.

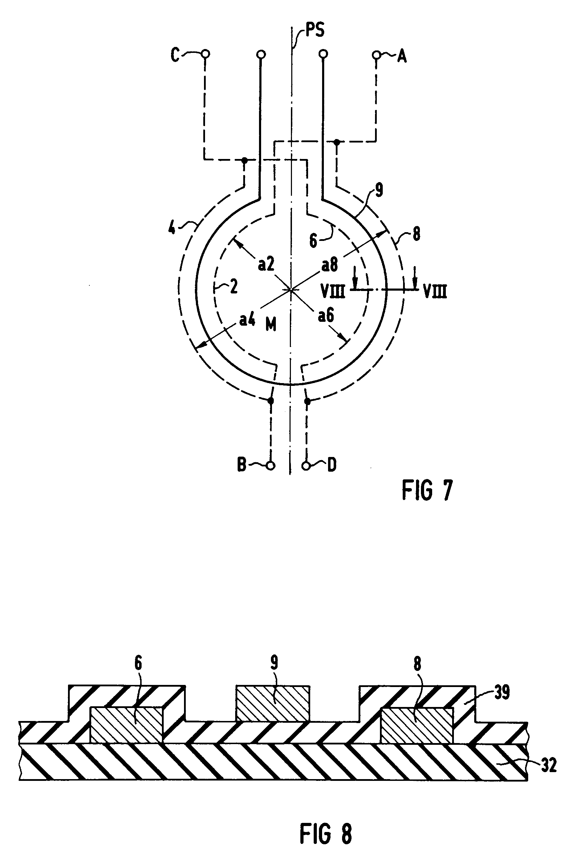

Eine besondere Ausführungsform mit einer Detektor-Heizer-Detektor-Anordnung in den Sensoren 10 und 20 ist in FIG. 7 in einer Draufsicht und in FIG. 8 in einem Querschnitt dargestellt, der zwischen den mit VIII bezeichneten Pfeilen in FIG. 7 verläuft. Die - nicht bezeichneten - Sensoren 10 und 20 sind wieder spiegelsymmetrisch zur Symmetrieebene PS ausgebildet. Zwischen den Widerstandseinrichtungen 2 und 4 und zwischen den Widerstandseinrichtungen 6 und 8 ist ein gemeinsames Heizelement 9 angeordnet. Die etwa halbkreisförmigen Widerstandseinrichtungen 2, 4, 6 und 8 sind in einer ersten Lage direkt auf der Membran 32 angeordnet, und das durchgehende, annähernd kreisrunde Heizelement 9 ist in einer weiteren Lage auf einer zusätzlichen dielektrischen Schicht 39 angeordnet, die auf die Membran 32 und die Widerstandseinrichtungen 2, 4, 6 und 8 aufgebracht ist. In der Draufsicht liegen die Widerstandseinrichtungen 2, 4, 6 und 8 und die Kontaktstellen A, B, C und D unter der Schicht 39 und sind deshalb gestrichelt eingezeichnet. Eine solche Mehrlagenanordnung kann auch bei allen anderen Ausführungsformen vorgesehen sein. Dabei können auch nur die Verbindungsleitungen der Widerstandseinrichtungen 2, 4, 6 und 8 oder nur die Kreuzungspunkte der Verbindungsleitungen in der zweiten Lage angeordnet sein.

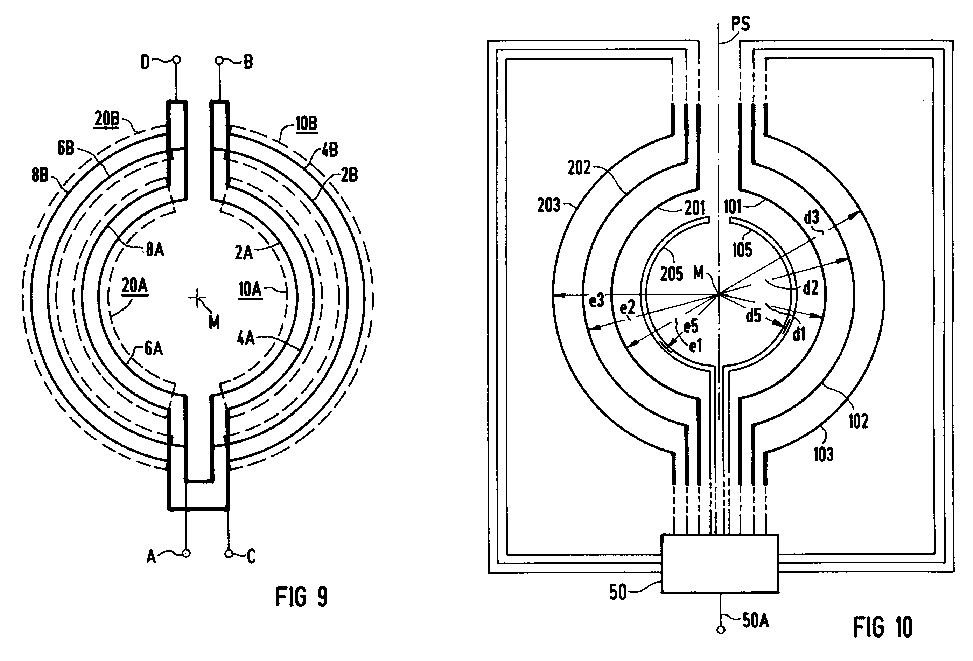

In der Ausführungsform gemäß FIG. 9 bestehen die vier Widerstandseinrichtungen 2, 4, 6 und 8 jeweils aus zwei parallel geschalteten Teilwiderstandselementen 2A und 2B bzw. 4A und 4B bzw. 6A und 6B bzw. 8A und 8B. Es können aber auch mehr als zwei Teilwiderstandselemente für jede Widerstandseinrichtung vorgesehen sein. Die Teilwiderstandselemente 2A und 4A sowie 6A und 8A bilden einen ersten Teilsensor 10A bzw. 20A und die Teilwiderstandselemente 2B und 4B sowie 6B und 8B einen zweiten Teilsensor 10B bzw. 20B des entsprechenden Sensors 10 bzw. 20. Die Abstände der Teilsensoren sind größer als die Abstände der Teilwiderstandselemente in den Teilsensoren zu wählen, um ein Übersprechen der Teilsensoren aufeinander zu vermeiden. Vorzugsweise sind sowohl die Abstände aller Teilsensoren zueinander konstant als auch die Abstände der jeweils zwei Teilwiderstandselemente in jedem Teilsensor. In der dargestellten Ausführungsform sind die Teilsensoren 10A und 10B zueinander unmittelbar benachbart und die Teilsensoren 20A und 20B ebenfalls. Die Teilsensoren 10A und 10B bzw. 20A und 20B bilden somit jeweils einen Sensorblock. Die Teilsensoren 10A und 10B sowie die Teilsensoren 20A und 20B sind miteinander parallelgeschaltet. Es sind vorzugsweise die parallelgeschalteten Teilwiderstandselemente 2A und 2B über die Kontaktstelle B mit den parallelgeschalteten Teilwiderstandselementen 4A und 4B, diese parallelgeschalteten Teilwiderstandselemente 4A und 4B über die Kontaktstelle C mit den parallelgeschalteten Teilwiderstandselementen 8A und 8B, diese Teilwiderstandselemente 8A und 8B über die Kontaktstelle D mit den parallelgeschalteten Teilwiderstandselementen 6A und 6B und diese Teilwiderstandselemente 6A und 6B über die Kontaktstelle A wieder mit den Teilwiderstandselementen 2A und 2B verbunden.

Die Teilsensoren können allerdings auch in Reihe geschaltet sein. Außerdem kann in einer weiteren Ausführungsform zwischen zwei Teilsensoren 10A und 10B des ersten Sensors 10 ein Teilsensor 20A des zweiten Sensors 20 und zwischen zwei Teilsensoren 20A und 20B des zweiten Sensors 20 ein Teilsensor 10B des ersten Sensors 10 angeordnet sein.

Eine besondere Ausführungsform mit einem erweiterten Meßbereich ist in FIG. 10 dargestellt. Es sind konzentrisch zur Mittelachse M und spiegelsymmetrisch zur Symmetrieebene PS auf beiden Seiten von innen nach außen jeweils ein Heizelement 105 und 205 im Abstand d5 bzw. e5 von der Mittelachse M und wenigstens drei Widerstandseinrichtungen 101 bis 103 bzw. 201 bis 203 als Detektoren vorgesehen, die jeweils mit einer Schalt- und Auswerteeinheit 50 in Reihe geschaltet sind. Die Abstände d2-d1 und d3-d2 der Widerstandseinrichtungen 102 und 101 bzw. 103 und 102 voneinander sind vorzugsweise gleich groß. Entsprechend werden auch die Abstände e2-e1 und e3-e2 der spiegelsymmetrischen Widerstandseinrichtungen 202 und 201 bzw. 203 und 202 eingestellt. Von der Einheit 50 werden die Heizelemente 105 und 205 mit einer wenigstens annähernd konstanten Leistung oder auf eine wenigstens annähernd konstante Temperatur beheizt. Durch Umschalten zwischen verschiedenen Widerstandseinrichtungen auf jeder Seite in eine Wheatstone-Brücke können mit der Schalt- und Auswerteeinheit 50 Sensoren mit variablen Abständen ihrer Widerstandseinrichtungen gebildet werden. Somit kann der Meßbereich der Vorrichtung verschiedenen Strömungsgeschwindigkeiten angepaßt werden. Das Meßsignal der Wheatstone-Brücke kann dann an einem Ausgang 50A der Schalt- und Auswerteeinheit 50 abgegriffen werden.

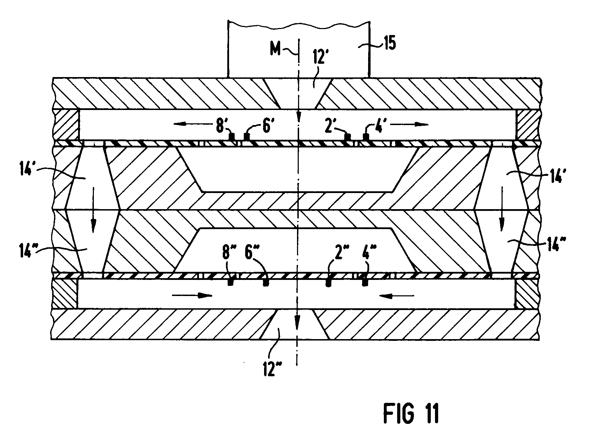

In der Ausführungsform gemäß FIG. 11 sind zwei Vorrichtungen gemäß der in FIG. 5 dargestellten Ausführungsform so zu einer Vorrichtung zusammengesetzt, daß sie nacheinander von der Strömung durchströmt werden. Dazu sind die beiden Teilvorrichtungen derart miteinander verbunden, daß ihre Mittelachsen in einer gemeinsamen Mittelachse M zusammenfallen und die äußeren Öffnungen 14' der ersten Teilvorrichtung mit den äußeren Öffnungen 14'' der zweiten Teilvorrichtung verbunden sind. Die innere Öffnung 12' der ersten Teilvorrichtung ist als Einlaßöffnung der zusammengesetzten Vorrichtung mit dem Strömungsraum 15 verbunden, und die innere Öffnung 12'' der zweiten Teilvorrichtung ist als Auslaßöffnung für die Strömung vorgesehen. In der ersten Teilvorrichtung überströmt die radiale Strömung die Widerstandseinrichtungen 2', 4', 6' und 8' von innen nach außen und in der zweiten Teilvorrichtung die entsprechenden Widerstandseinrichtungen 2'', 4'', 6'' und 8'' von außen nach innen. Durch die Wahl unterschiedlicher Abstände der Widerstandseinrichtungen der beiden Teilvorrichtungen kann diese Vorrichtung vorzugsweise zur Messung in einem erweiterten Strömungsgeschwindigkeitsbereich eingesetzt werden, indem wahlweise das Meßsignal der Wheatstone-Brücke der ersten oder der zweiten Teilvorrichtung entsprechend herangezogen wird. Um einen noch größeren Meßbereich abdekken zu können, können noch weitere Teilvorrichtungen kaskadenartig hinzugefügt werden, die entsprechend für andere Strömungsgeschwindigkeitsbereiche ausgelegt sind.

Die Vorrichtung zur Messung von Gas- und Flüssigkeitsströmungen gemäß der Erfindung wird vorzugsweise mit Hilfe der Mikrostrukturtechnik in Silizium gefertigt. Als Material für den Stützkörper 30, den Deckel 37 und den Abstandhalter 38 wird deshalb vorzugsweise Silizium gewählt. Für den Abstandhalter 38 kann auch Glas oder Keramik vorgesehen sein. Die Membran 32 besteht vorzugsweise aus Siliziumnitrid, Siliziumdioxid oder einer Sandwich-Struktur aus diesen beiden Siliziumverbindungen. Als Materialien für die Widerstandseinrichtungen 2, 4, 6 und 8 können Nickel, Gold, Platin, Tantal, Wolfram oder auch polykristallines Silizium gewählt werden. Die Verbindung der Membran 32 mit dem Stützkörper 30 und dem Abstandhalter 38 sowie die Verbindung des Abstandhalters 38 mit dem Deckel 37 kann mit Standardverbindungstechniken wie beispielsweise Anodic Bonding, eutektischem Verbinden oder auch Kleben erfolgen. Die Öffnungen 12 und 14 werden vorzugsweise anisotrop geätzt. Die Öffnung 35 wird in der Ausführungsform gemäß FIG. 1 anisotrop von der von der Membran 32 abgewandten Rückseite des Stützkörpers 30 geätzt. Die Membran 32 dient dabei als Ätzstopschicht. Die den Stützkörper 30 und den Verschluß 36 in der Ausführungsform gemäß FIG. 4 verbindende Verbindungsschicht 31 kann beispielsweise eine Klebeschicht oder auch eine eutektische Goldschicht sein. Die Ausnehmung 34 in der Ausführungsform gemäß FIG. 5 wird vorzugsweise durch Unterätzen durch die kleinen Löcher 33 in der Membran 32 erzeugt.

Zum Schutz vor reaktiven Gasen oder Flüssigkeiten können die Widerstandseinrichtungen mit einer nicht dargestellten Schutzschicht überzogen werden, die vorzugsweise aus demselben Material wie die Membran 32 besteht.

**Patentansprüche**

1. Vorrichtung mit Mitteln zur Messung einer bezüglich einer Mittelachse (M) wenigstens annähernd radialen Gas- oder Flüssigkeitsströmung mit folgenden Merkmalen:
   a) es sind vier Widerstandseinrichtungen (2, 4, 6, 8) mit jeweils einem temperaturabhängigen elektrischen Widerstand ($R_2$, $R_4$, $R_6$, $R_8$) vorgesehen, deren mittlerer Abstand (a2, a4, a6, a8) von der Mittelachse (M) jeweils wenigstens annähernd konstant ist;
   b) jeweils zwei in Strömungsrichtung gesehen hintereinander angeordnete Widerstandseinrichtungen (2, 4 bzw. 6, 8) bilden einen Sensor (10 bzw. 20), wobei die Anordnung der Widerstandseinrichtungen (2, 4, 6, 8) so gewählt ist, daß sich die Sensoren (10 und 20) thermisch im wesentlichen nicht beeinflussen;
   c) die vier Widerstandseinrichtungen (2, 4, 6, 8) sind zu einer Wheatstone-Brücke derart zusammengeschaltet, daß stromabwärts gelegene Widerstandseinrichtungen (2 und 6) und stromaufwärts gelegene Widerstandseinrichtungen (4 bzw. 8) einander abwechseln.

2. Vorrichtung nach Anspruch 1, **dadurch gekennzeichnet,** daß die beiden Sensoren (10 und 20) bezüglich der radialen Strömungsrichtung hintereinander angeordnet sind.

3. Vorrichtung nach Anspruch 1, **dadurch gekennzeichnet,** daß die beiden Sensoren (10 und 20) auf verschiedenen Seiten einer die Mittelachse (M) enthaltenden Symmetrieebene (PS) angeordnet sind.

4. Vorrichtung nach einem der vorhergehenden Ansprüche, **dadurch gekennzeichnet,** daß

a) die Widerstandseinrichtungen (2, 4, 6, 8) jeweils aus wenigstens zwei Teilwiderstandselementen (2A und 2B bzw. 4A und 4B bzw. 6A und 6B bzw. 8A und 8B) aufgebaut sind, deren mittlere Abstände von der Mittelachse (M) wenigstens annähernd konstant und voneinander verschieden sind;

b) in beiden Sensoren (10 und 20) jeweils ein Teilwiderstandselement (2A, 2B bzw. 6A, 6B) der entsprechenden stromaufwärts angeordneten Widerstandseinrichtung (2 bzw. 6) mit einem Teilwiderstandselement (4A, 4B bzw. 8A, 8B) der entsprechenden stromabwärts angeordneten Widerstandseinrichtung (4 bzw. 8) einen Teilsensor (10A, 10B bzw. 20A, 20B) bilden;

c) die Teilsensoren (10A, 10B, 20A, 20B) in einem hinreichend großen Abstand voneinander angeordnet sind, damit sie einander bei der Messung praktisch nicht thermisch beeinflussen.

5. Vorrichtung nach einem der vorhergehenden Ansprüche, **dadurch gekennzeichnet,** daß Mittel zum Umwandeln einer in einem Strömungsraum (15) herrschenden, nicht-radialen Strömung in eine bezüglich der Mittelachse (M) wenigstens annähernd radiale Strömung vorgesehen sind.

6. Vorrichtung nach Anspruch 5, **dadurch gekennzeichnet,** daß

a) als Mittel zum Umwandeln der nichtradialen Srömung in die wenigstens annähernd radiale Strömung vorgesehen sind:

a1) eine erste Begrenzung und eine zweite Begrenzung, deren einander zugewandte Oberfläche zwei Seitenflächen eines Hohlraumes (11) bilden;

a2) wenigstens eine erste Öffnung (12) in der ersten Begrenzung, die in einem Bereich um die Mittelachse (M) angeordnet ist;

a3) mindestens eine zweite Öffnung (14), die bezüglich der Mittelachse (M) weiter außen angeordnet ist als die erste Öffnung (12), wobei

a4) der Hohlraum (11) entweder nur über die erste Öffnung (12) oder nur über die mindestens eine zweite Öffnung (14) mit dem Strömungsraum (15) der nicht-radialen Strömung verbunden ist;

b) die Widerstandseinrichtungen (2, 4, 6, 8) in einem Bereich des Hohlraumes (11) zwischen der ersten Öffnung (12) und der mindestens einen zweiten Öffnung (14) angeordnet sind.

7. Vorrichtung nach Anspruch 6, **dadurch gekennzeichnet**, daß wenigstens zwei Mittel zum Umwandeln einer nichtradialen Strömung in eine radiale Strömung derart hintereinander geschaltet sind, daß die Strömungsrichtung alternierend von innen nach außen und von außen nach innen verläuft.

8. Vorrichtung nach Anspruch 6 oder Anspruch 7, **dadurch gekennzeichnet**, daß

a) als zweite Begrenzung eine Membran (32) aus einem dielektrischen Material vorgesehen ist, die auf einem Stützkörper (30) abgestützt ist;

b) die Widerstandseinrichtungen (2, 4, 6, 8) auf dieser Membran (32) ausgebildet sind.

9. Vorrichtung nach einem der Ansprüche 6 bis 8, **dadurch gekennzeichnet,** daß zwischen der ersten und der zweiten Begrenzung ein Abstandhalter (38) angeordnet ist und dieser Abstandhalter (38) mit der mindestens einen zweiten Öffnung (14) versehen ist.

10. Vorrichtung nach einem der vorhergehenden Ansprüche, **dadurch gekennzeichnet**, daß zwischen den beiden Widerstandseinrichtungen (2 und 4 sowie 6 und 8) jedes Sensors (10 bzw. 20) ein Heizelement angeordnet ist.

11. Vorrichtung nach einem der Ansprüche 1 bis 9, **dadurch gekennzeichnet,** daß alle Widerstandseinrichtungen (2, 4, 6, 8) als Heizelement und Detektor zugleich vorgesehen sind.

12. Vorrichtung nach einem der vorhergehenden Ansprüche, **dadurch gekennzeichnet**, daß wenigstens eine Widerstandseinrichtung (2, 4, 6, 8) als Mäander ausgebildet ist.

13. Vorrichtung nach einem der vorhergehenden Ansprüche, **dadurch gekennzeichnet,** daß die Widerstände ($R_2$, $R_4$, $R_6$ und $R_8$) aller vier Widerstandseinrichtungen (2, 4, 6 und 8) bei einer Referenztemperatur ($T_O$) gleich groß sind.

14. Vorrichtung nach einem der vorhergehenden Ansprüche, **dadurch gekennzeichnet**, daß jeder Sensor (10 und 20)

a) mindestens drei Widerstandseinrichtungen (101, 102 und 103 bzw. 201, 202 und 203) enthält,

a1) die bezüglich der radialen Strömungsrichtung hintereinander angeordnet sind,

a2) deren mittlere Abstände (d1, d2, d3 bzw. e1, e2, e3) von der Mittelachse (M) wenigstens annähernd konstant und voneinander verschieden sind und

a3) die zum Einstellen unterschiedlicher Meßbereiche paarweise in die Wheatstone-Brücke schaltbar sind,

sowie

b) wenigstens ein Heizelement (105) enthält, dessen mittlerer Abstand (d5 bzw. e5) von der Mittelachse (M) wenigstens annähernd konstant und kleiner als die mittleren Abstände (d1, d2, d3 bzw. e1, e2, e3) der Widerstandseinrichtungen (101, 102, 103 bzw. 201, 202, 203) von der Mittelachse (M) ist.

FIG 1

FIG 2

FIG 3

FIG 4

FIG 5

FIG 6

FIG 7

FIG 8

FIG 10

FIG 9

FIG 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | FR-A-2 219 406 (RCA CORPORATION)<br>* Seite 1, Zeile 1 - Zeile 8 *<br>* Seite 4, Zeile 30 - Seite 5, Zeile 13; Abbildungen 1,2 *<br>--- | 1-3 | G01P5/10 |
| Y<br>A | EP-A-0 119 327 (ANTONIUS F.P. VAN PUTTEN)<br>* Seite 4, Zeile 1 - Zeile 5; Abbildungen 1-3 *<br>--- | 1-3<br>11 | |
| A | EP-A-0 450 563 (HITACHI, LTD.)<br>* Seite 4, Zeile 6 - Zeile 31; Abbildungen 1-3,4A,6 *<br>--- | 5,6 | |
| A | GB-A-2 240 627 (YAMATAKE-HONEYWELL CO. LTD.)<br>* Seite 5, Zeile 1 - Zeile 24; Abbildungen 1-5 *<br>----- | 10,12 | |

|  |  |
|---|---|
| | **RECHERCHIERTE SACHGEBIETE (Int.Cl.5)**<br><br>G01P<br>G01F |

Der vorliegende Recherchenbericht wurde für alle Patentansprüche erstellt

| Recherchenort | Abschlußdatum der Recherche | Prüfer |
|---|---|---|
| DEN HAAG | 11. Oktober 1994 | Hansen, P |